(19) **Europäisches Patentamt**

**European Patent Office**

**Office européen des brevets**

(11) **EP 1 467 532 A2**

(12) **EUROPEAN PATENT APPLICATION**

(43) Date of publication:
**13.10.2004 Bulletin 2004/42**

(51) Int Cl.7: **H04L 29/00**

(21) Application number: **03103680.9**

(22) Date of filing: **03.10.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **14.10.2002 GB 0223698**<br><br>(71) Applicant: **MOTOROLA, INC.**<br>**Schaumburg, IL 60196 (US)** | (72) Inventor: **MITCHELL, William, Peter, Robin**<br>**RG22 4PD, Basingstoke (GB)**<br><br>(74) Representative: **McCormack, Derek James**<br>**Motorola**<br>**European Intellectual Property Operations**<br>**Midpoint**<br>**Alencon Link**<br>**Basingstoke Hampshire RG21 7PL (GB)** |

(54) **Test specifications for system specifications**

(57)   A method (200) of detecting feature conflicts in a system specification includes generating (210) phase transitions of a system specification, defined with a graphical notation, and translating (230) the phase transitions into one or more abstract implementation. Feature combinations of the one or more abstract implementation are analysed (260) to detect one or more feature conflicts in the system specification.

In this manner, an analysis can be made on the implied concurrent behaviour of features in system specifications, particularly partial specifications, which allows feature conflict detection.

## Description

Field of the Invention

This invention relates to test specifications for system specifications. The invention is applicable to, but not limited to, system specifications in the form of message sequence charts and in particular a method for describing phase transitions in a partially specified protocol.

Background of the Invention

In the field of this invention, it is known how to generate test scripts automatically from a system specification. A system specification includes system requirements that are described in some formal notation such as Message Sequence Charts (MSCs). This is often employed in systems for telecommunications processes. In this case, a collection of individual test scripts may be considered, in combination, as representing a test specification for the telecommunication system specification.

By analysing these test scripts, the functionality and operation of a practical telecommunication system may be simulated. Advantageously, this enables flaws and discrepancies to be determined prior to manufacturer and full system installation. Examples of the test script techniques can be found in "An Industrial Use of FP: A Tool for Generating Test Scripts from System Specifications", International Conference on Functional Programming, by P. Baker, C. Jervis, D. King, in Trends in Functional Programming, 2000, ISBN 18415002400, and "Design Tools for Requirements Engineering" by Gerard J. Holzmann, Doron A. Peled, and Margaret H. Redberg, Bell Labs Technical Journal, Winter 1997.

A superficially simple specification can lead to a vast number of test scripts. For example, an elementary MSC with only 24 messages can generate 2,704,156 different tests!

Tools such as "ptk" (a tool described in the above mentioned Baker et al. reference) may take the requirements specification in MSC form and automatically generate the complete set of test scripts that are required for conformance testing. However, ptk is limited as to the total number of test scripts it is able to generate.

Two particular problems arise when large numbers of test scripts are derived from a system specification. The first problem is how to construct such a potentially huge number of test scripts.

The second problem is how to analyse such a large number of test scripts; since it may well be the case that many of the test scripts are either not needed or are unimportant.

Another issue with conventional test specifications comprising multiple test scripts is that if practitioners wish to simulate a system in SDL (ITU Recommendation Z.100, Specification and Description Language) they have to write the code by hand. This is time consuming, and can be error prone.

General prior art relating to the field of this invention is found in "Synthesizing ROOM Models from Message Sequence Chart Specifications" by Stefan Leue, Lars Mehrmann, Mohammad Rezai, obtainable at:

http://fee.uwaterloo.ca/~sleue/msc.html#tr98-06;

and "Interpreting Message Flow Graphs, Formal Aspects of Computing", by Stefan Leue, P. Ladkin, 7(5): 473-509, 1995; and "Model checking of message sequence charts" by R. Alur and M. Yannakakis, Proceedings of the Tenth International Conference on Concurrency Theory, Springer Verlag, 1999 obtainable at:

http://www.cis.upenn.edu/~alur/onlinepub.html.

These papers detail how to construct a finite state automaton from a simple MSC and how to perform "model checking analysis" of this. Performing model checking analysis does not constitute generating a test specification, because model checking is only concerned with investigating the inter-relationships of the states in the state machine. Moreover, the algorithms disclosed in these papers, although compatible with non-concurrent iteration, are not compatible with MSCs (or other system specifications) comprising concurrent iteration between processes.

When simulating and predicting the operation of a wireless communication system such as the TErrestrial Trunked RAdio (TETRA) system, there are operational phases such as *call set-up, call active, call roaming, call queued,* and *ruthless resource pre-emption*, that need to be taken into account. The TETRA system specification defines phase transitions such as a call transitioning from *call set-up* to *call active*. Some of these transitions may involve other phases. For example, the transition from *call set-up* to *call active* may include intermediate transitions to *call queued* or *ruthless resource pre-emption*, as known in the art.

It is known that some engineering designs use a graphical notation, which is equivalent to MSC notation, in order to define a system requirements specification. The purpose of these system requirements is to define important phase transitions within the system components. In this regard, a graphical notation is used in a non-standard manner to annotate these phase diagrams with additional information about particular phase transitions. For example, one manner may use MSC conditions to define a current active phase within a system component, whereas a second manner may use text boxes to perform the same function in universal machine language (UML) sequence diagrams.

Although the graphical representations provide a deceptively simple form for implementing such phase transitions, the inventor of the present invention has recognised that they are not suitable for the purpose of detecting feature interactions. A further drawback has been recognised in that graphical representations only partially specify a system. This makes it very difficult to apply standard feature interaction detection techniques. Feature interaction detection is now recognised as a critical problem in the release of new products.

In effect, the non-standard use of phases and phase transitions within MSC/UML sequence diagrams means that engineering design groups are implicitly defining non-standard semantics for an implementation derived from their specifications. These semantics only become apparent when the specification contains multiple features.

There are many known technologies for detecting feature conflicts for complete specifications. None of these technologies are helpful for partial specifications. In general, such techniques detect large numbers of spurious conflicts in a partial specification that render them ineffective.

A need has therefore arisen for a mechanism to detect feature conflicts in a system specification, particularly in a partially specified system, thereby alleviating the above-mentioned problems.

Summary of Invention

In a first aspect, the present invention provides a method of detecting feature conflicts in a system specification, as claimed in Claim 1. In a second aspect, the present invention provides a method of constructing a phase automaton, as claimed in Claim 7. In a third aspect, the present invention provides a method of testing a system specification, as claimed in Claim 11. In a fourth aspect, the present invention provides a storage medium storing processor-implementable instructions, as claimed in Claim 13. In a fifth aspect, the present invention provides an apparatus, as claimed in claim 14. Further aspects are as claimed in the dependent claims.

The inventor of the present invention has recognised that none of the existing techniques use the concept of phase transition to search for conflicts. The inventor has further recognised that this technique greatly reduces the search space of potential conflicts and appears to detect a small number of significant conflicts rather than many minor conflicts.

In summary, the present invention provides a method of translating phase transition requirements defined with a graphical notation such as MSCs or UML sequence diagrams into a form of abstract implementation which is useful for analysing feature combinations. This leads to a methodology for detecting feature conflicts in a partially specified system. The main advantage of the invention here is its suitability for analysing the implied concurrent behaviour of features in partial specifications leading to a methodology for feature conflict detection. This methodology is unique in that it focuses on the phase transitions in a partial specification to detect feature conflicts.

Brief Description of the Drawings

Embodiments of the present invention will now be described, by way of example only, with reference to the accompanying drawings, in which:

FIG. 1 is a flowchart showing the process for obtaining feature requirements in order to define a partial specification in accordance with the preferred embodiment of the present invention;
FIG. 2 is a flowchart showing the process for defining a partial specification in accordance with the preferred embodiment of the present invention;
FIG. 3 illustrates a message sequence chart;
FIG. 4 illustrates a simple finite state automaton;
FIG. 5 illustrates a simple finite state automaton;
FIG. 6 illustrates a finite state automaton generated for the message sequence chart of FIG. 3; and
FIG. 7 illustrates a block diagram overview of a software tool system that implements the methods according to the preferred embodiments of the present invention.

Description of Preferred Embodiments

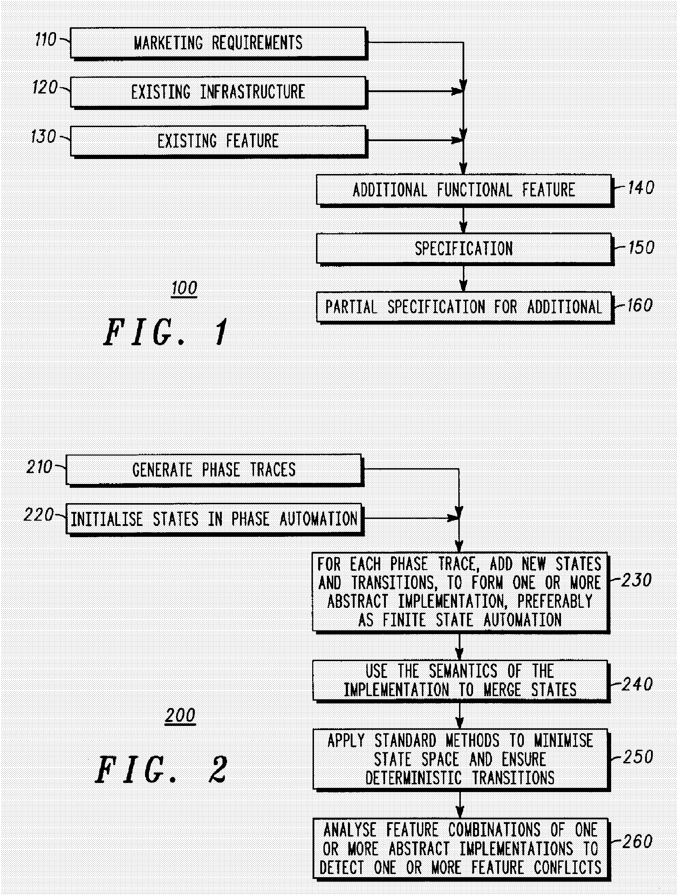

Referring now to FIG. 1, a flowchart 100 illustrates a method for defining a partial specification, in accordance with the preferred embodiment of the present invention. A system specification, i.e. a specification of the functional requirements of a system is often described in terms of a message sequence chart (MSC). However, a skilled artisan would recognise that this is not the only form such a specification may take. FIG. 1 shows a flowchart of the input steps that may occur in defining a partial specification. The inputs to the generation of a partial specification include, for example, a list of:

(i) Marketing requirements, 110,
(ii) Existing infrastructure requirements or elements, 120, and
(iii) Existing feature requirements, 130.

Clearly, for other systems, alternative or additional requirements can be used. Singly, or in combination, the above requirements may be embellished with additional functional feature requirements in step 140 before being passed to a specification editor 150. The purpose of such a specification editor 150 is to describe a partial ordering of the events that occur when operating the system. It is then possible to regard a specification as a partial order on a set of events. Hence, the specification editor forms a partial specification with one or more additional features, in step 160.

This is the context of a specification that will be used to describe the preferred embodiment of the present invention. The partial ordering describes the relative order in which the events are to occur, in practice, as specified by the functional requirements.

Finite State Automaton:

Referring now to FIG. 2, a flowchart 200 for detecting feature conflicts in a system specification is illustrated, for example, one that generates a finite state automaton (FSA) representing one or more abstract implementations. An FSA is generated by initialising a set of states, in step 220, together with a set of labelled transitions between the states. Phase traces are generated in step 210, and for each phase trace, new states and transitions are added, as shown in step 230. In addition, one of the states is termed the start state, and one or more of the states are referred to as accepting states.

An FSA has a very simple visual form, considering the level of information contained therein. As a simple example let the set of states be A, B, C and take as the labelled transitions A<a>B, B<b>A and A<c>C. Here we write X<y>Z to denote there is a transition from state X to state Z, which has label y. Let A be the start state and C be the only accepting state. Hence, there are three nodes A, B and C, an edge from A to B labelled with a, an edge from B to A labelled with b, and an edge from A to C labelled with c. There are infinitely many paths going from A to C. For example one path is A<a>B<b>A<a>B<b>A<c>C. Given any path from A to C we can write out the labels of the transitions that occur. For the example just given the sequence will be <a,b,a, b,c>. The set of all such sequences is defined to be the language accepted by the FSA.

The field of finite state automaton is well documented, and further details may be found, for example, in an elementary text such as Introduction to Automata Theory, Hopcroft and Ullman. Also, note that a finite state automaton is sometimes referred to as a finite state machine.

The following notation will be used in the description of the finite state automaton (FSA) generated in this embodiment. An FSA is a (finite) collection of states S and a (finite) collection of transitions between the states. A transition of the form <s1, e, s2> denotes a transition from state s1 to state s2, which is triggered by the event 'e'. The aim of the present invention is to find an FSA that captures the phase transitions in the system specifications whilst also accurately defining the traces that occur in the system.

Furthermore, let us assume that any instance implementation may be translated into a deterministic finite state automaton (DFSA), as shown in step 250. A DFSA is an automaton where, for each state, an event that can occur in that state uniquely defines the next state. Thus, for each state 's' and event 'e', there is at most one transition of the form <s, e, s'>. In accordance with the preferred embodiment of the present invention, feature combinations of one or more abstract implementations, preferably in the form of finite state automata, are analysed in step 260, to detect one or more feature conflicts in said system specification.

Note that it is not necessary that a DFSA is ever built, it is only necessary that it is theoretically possible for such a translation to exist. Then any feature conflicts that are caused by the DFSA must also occur in the actual implementation, whether that is written in C, Java, SDL or any other form.

The preferred embodiment of the present invention can be divided into two sections. The first section is to define rigorously the non-standard semantics for an implementation of a set of phase transition requirement specifications. The second section defines a preferred method for translating a collection of phase transition requirements into an abstract implementation, for example, in the form of a finite state automaton.

Definition of Partial Specification Implementation:

The standard semantics for an implementation of a set of requirements specifications essentially states that the implementation must generate exactly the set of execution traces defined by the corresponding MSC specifications. The additional phase transition information further restricts how these traces are to be generated.

Intuitively it is possible to summarise the semantics in the following manner. An automaton is an implementation of a set of MSC phase transition requirements if it always operates as follows. Suppose an automaton during its execution generates the first part of the specification trace. If, during this execution, the automaton has reached a point where a phase transition is possible, then the implementation is always able to generate the rest of the trace from that point. Such an operation does not preclude the implementation of the phase transitions in the requirements.

A more precise definition is provided below. By establishing how the phases of operation used in the system specification restrict one or more potential system implementations, it is possible to discover some of the concurrent behaviour of the features when they are extemporaneously run. This is concurrent behaviour not explicitly defined by the original specification, but implied by the phase semantics of the combined features. Within this set of concurrent behaviours, the inventor of the present invention has recognised that it is possible to search for feature conflicts.

The preferred embodiment of the present invention is based on MSCs where conditions are used to define what phase of operation is currently active in each instance of an MSC. However, it is within the contemplation of the invention that the described method is applicable to any notation mechanism that describes a system as a set of traces. In this regard, each event in a trace may be associated with a particular phase of a system's operation.

Let us assume that, in principle, a finite state automaton may implement any specification. The collection of MSCs that form a specification, define how the different MSC instances are to collaborate in some collective task. Let us suppose that each MSC instance is to be implemented as a separate entity. The phase semantics of a specification are defined as properties of the automaton implementation.

Each phase of operation is interpreted as defining a collection of states within the automaton. A phase of operation restricts the region within the automaton that can be active whilst that phase is valid. Essentially a phase is interpreted as a composite state of a DFSA.

Let us assume that a DFSA is provided where each phase of operation is associated with a set of states in the automaton, and every state belongs to one of these sets. Any sequence of transitions in the automaton defines an execution trace. This is the sequence of events given by the transitions. For example, the following transition sequence defines the trace e1, e2, e3:

$$<s1, e1, s2>, <s2, e2, s3>, <s3, e3, s4> \qquad [1]$$

Execution traces from the automaton can then be studied that are annotated with information describing which phase each trace event originates in. Similarly, the events in any MSC trace may be annotated with the current phase of operation as defined by the MSC conditions. In this context, it is reasonable to state that a sequence of transitions generates a given phase trace when it is the same as the execution phase trace defined by the transitions.

The phase semantics for an implementation of a set of MSC phase traces are preferably defined as follows. Let us define:

(i) A 'state': to be a phase exit state if there is a transition from there to some state belonging to a different phase. That is the transition causes a change in phase. If all the transitions from this state lead to states within the same phase the state cannot be a phase exit state.

(ii) A 'sequence of transitions in a DFSA': to be a phase precursor if the final state in the sequence is a phase exit state. If the final state is not a phase exit state then the sequence cannot be a phase precursor.

(iii) A DFSA: to be an implementation of a set 'T' of MSC phase traces, if the following condition holds, i.e. any phase precursor that generates the initial part of an MSC phase trace in the set 'T' can always be extended to generate the whole of that trace.

The inventor of the present invention has validated the above theories through a series of case studies, based on requirements specifications of a number of communication systems, including TETRA.

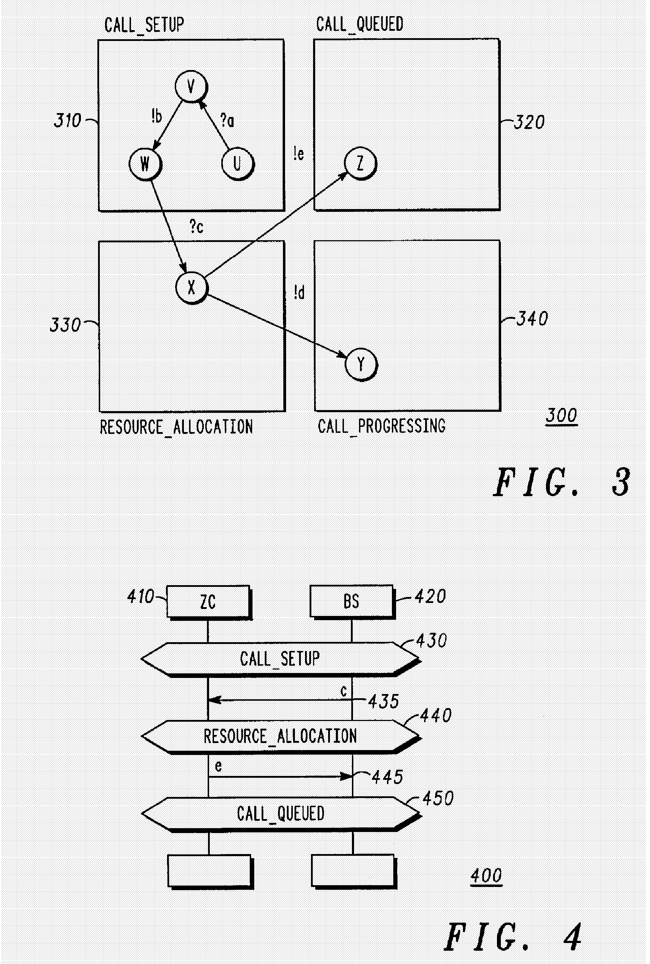

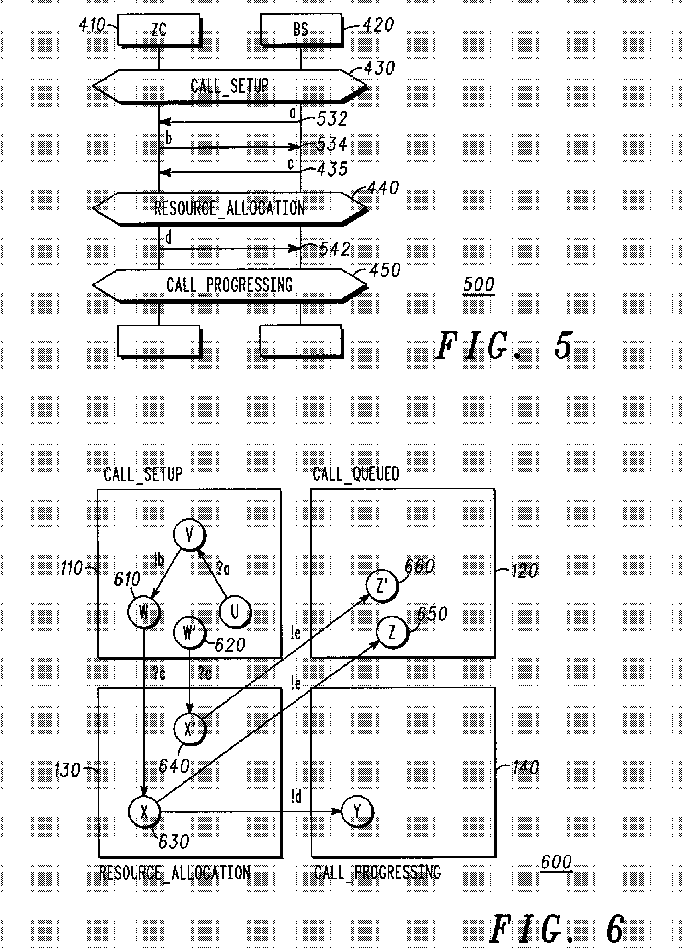

Referring now to FIG. 3, a DFSA of a minimal automaton 300 is illustrated. In accordance with the preferred embodiment of the present invention, the DFSA is defined by a set of instant phase semantics, for example for the zone controller (ZC) 410 of the MSCs of FIG.4 and FIG. 5.

The boxes in FIG. 3 delimit the phases in the automaton. In this regard, as indicated previously, four phases are defined as part of a typical configuration of a TETRA wireless communication system. The four phases include *call set-up* 310, *resource allocation* 330, *call progressing* 340 and *call queued* 320. Clearly, a skilled artisan would recognise that a much larger number of phases and instant phase semantics may be used in a practical system. Therefore the preferred embodiment is described with reference to four phases for explanatory purposes only.

For a message *'m'* in an MSC the diagram uses *!m* to denote the send event for *m*. For a message *?m*, in an MSC the diagram uses *?m* to denote the receive event for *m*, using conventional MSC terminology. Each circle ('u' to 'z') is a state of the automaton and an arrow between two states is a transition. An arrow label is the event associated with the transition. Interestingly, the phase semantics in FIG. 3 have forced the automaton to be capable of both performing a *!d* and a *!e* transition in state *x* of the resource allocation phase. That is the implementation is able to non-deterministically choose between two send events in state *x*.

If instance ZC is a system component, such as a zone controller, it should not be capable of making a nondeterministic choice between different send events. Within the TETRA system, the ZC should contain all relevant data to uniquely determine what the next send event is from the given inputs. In this case the single input *?c* allows ZC to arbitrarily choose to either queue a call (!e) or progress it (!d). In this hypothetical case, this could lead to a situation where the ZC can arbitrarily decide that all calls are queued and no call ever completes. This example represents a conflict between the two use cases, and would clearly lead to a significant problem in the system specification design (if it were detected) or in the product once shipped.

Hence, FIG. 3 illustrates that a DFSA implementation provided by the phase semantics, in accordance with the preferred embodiment of the present invention may be utilised to describe conflicts that are implicit in the specification, but are not necessarily explicitly stated.

Any DFSA that partitions the states of the automaton into phases, corresponding to the phases of operation in the specification, is a phase automaton. In the next section, a mechanism of how to construct this automaton is described.

Method for defining the Phase Automaton:

Referring back to FIG. 1, the input to the method is the collection of phase traces from the specification of one of the components in the specification. Where the specification is a collection of MSCs, we assume that each instance represents a system component. The output to the method is a phase automaton, which is an implementation of this set of phase traces.

For example, let us consider the MSCs between a zone controller (ZC) 410 and a Base Station (BS) 420 in FIG. 4 and FIG. 5. For brevity, let us define the following notations:

call_setup phase by 'CS',
resource_allocation phase by 'RS',
call_progressing phase by 'CP', and
call_queued phase by 'CQ'.

Referring now to FIG. 4, a simple example of an MSC 400 (generated by the DFSA 300 of FIG. 3) when applied to a TETRA wireless communication system, is shown. The MSC 400 includes two communication units, i.e. a zone controller (ZC) 410, drawn on the left-hand side, and a Base station (BS) 420, drawn on the right-hand side. The respective zone controller (ZC) 410 phase traces can be written in the following form:

Path '2' (t2) = CS, ?c, RS, !e, CQ.

This is the phase trace indicating that: a Call set up request 430 has been received (?c) 435 by ZC 410. A resource (RS) 440 is allocated (sent (!e)) 445 by the ZC 410 from the simple example specification (SES) MSC SES2 to the BS 420. The call is then queued (CQ) 450, as shown in FIG. 4.

Referring now to FIG. 5, an alternative example of an MSC 500 (generated by the DFSA 300 of FIG. 3) when applied to a TETRA wireless communication system, is shown. The MSC 500 includes the same two communication units, i.e. a zone controller (ZC) 410, drawn on the left-hand side, and a Base station (BS) 420, drawn on the right-hand side. The respective zone controller (ZC) 410 phase traces can be written in the following form:

Path 1 (t1) = CS, ?a, CS, !b, CS, ?c, RS, !d, CP
Path 2 (t2) =           CS, ?c, RS, !e, CQ

This is the phase trace indicating that: a Call set up request 510 has been received (?c) 532 by ZC 410 and sent (!b) 534 to 'w'. A resource allocation function (RS) 440 receives the call set up request (?c) 435 and progresses the call (sent (!d)) 542 to the BS 420, as shown in FIG. 4.

Each event is preceded with the phase that was current when the event occurred. The final phase appended to the end of the list is the phase that became current after the final event.

The phase semantics require that the states of any implementation be divided up into sets defined by the phases in the respective traces. In this example, this means that the states are split up into four sets, one for 'CS' 310, one for 'RS' 330, one for the 'CP' 340 and one for 'CQ' 320.

Each phase trace forces certain states to exist in the automaton. It is noteworthy that the phase traces of the above example are arranged such that the initial section of the second trace matches the middle of the first trace. When this situation arises, it is defined as an *'overlap'*. In the preferred embodiment of the present invention, these overlaps are used to provide a method of defining a minimal implementation for a set of phase traces.

The implementation is defined to have a set of states for each phase in the specification. Initially no states are allocated to these sets. For each phase trace, in turn, states and transitions are defined in the automaton as follows.

Let us assume that a phase trace is of the form:

$$S0, e1, S1, e2, ....., Sn, en, S(n+1) \qquad [2]$$

Where the Si are phases and ei are events.

For each triple Si, e(i+1), S(i+1), let us define states x(i) and x(i+1) in the automaton, with x(i) defined to be in the phase Si and x(i+1) defined to be in the phase S(i+1). Further, let us add a transition <x(i), ei, x (i+1)> to the automaton.

Once this is done for every phase trace, an automaton has been generated for all of the phase traces for the instance specification. However, this automaton is not yet an implementation as defined by the semantics of the previous section. For the above example, such an initial automaton would be equivalent to the DFSA 500, as shown in FIG. 5. In FIG. 5, the names of the states have been simplified for convenience.

In accordance with the preferred embodiment of the present invention, next we introduce states to ensure every precursor to a phase trace can be extended to generate that phase trace. Recall that every precursor to a phase trace must be extendable to complete that phase trace. When a precursor matches two respective phase traces, which are the cause of a trace overlap, it is proposed that the states are merged to reduce the overall state space.

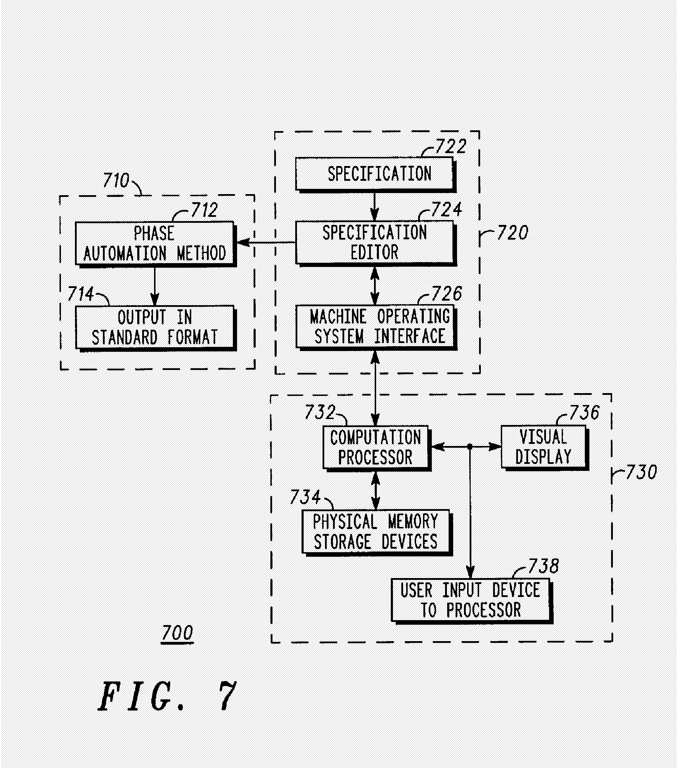

In the example shown in the DFSA 600 of FIG. 6, states w 610 and w' 620 belong to precursors. The sequence <u, ?a, v> followed by <v, !b, w> is a precursor to phase trace t1. State w' 620 is an exit state for phase call_setup 110 and forms the empty precursor to trace t2. Hence state w 610 may also be viewed as a precursor to t2. That means for the automaton to be an implementation it must be possible to adapt phase trace t2 by completing phase trace t2 from w 610. This is achieved by adding a state z 650 in phase call_queued 620 and a transition <x, !e, z>.

In the preferred embodiment of the present invention, the state space is now reduced as follows. Merge states z 650 and z' 660 into a single state z 650, merge x 630 and x' 640 into a single state x 630 and states w 610 and w' 620 into a single state w 610. This provides the equivalent implementation of FIG. 3. Advantageously, this merging operation is valid as it is simply removing redundant states from the automaton 600.

In general, the preferred embodiment of the present invention compares any precursors that are derived from an overlap of phase traces. The exit states, which are the ends of the precursors, are merged into a single state. Any successor states are then recursively merged to ensure the automaton is deterministic. In the example of FIG. 6, states w 610 and w' 620 are the exit states which are merged. Then to ensure non-determinism, states x 630 and x' 640 are merged. State z 650 and z' 660 are also merged for the same reason.

Finally, the state space can be minimised using any standard automata minimisation algorithm such as those given in the text by Hopcroft and Ullman referred to previously. The result is a phase automaton that implements the given set of phase traces. In this manner, a minimal automaton is generated, that is one with the fewest number of states. As described in the above description, this automaton can then be analysed for possible feature conflicts.

It is within the contemplation of the invention that configuring, or adapting, any suitable apparatus may implement the aforementioned embodiments. For example, a computer or other processing apparatus may be adapted. Alternatively, a processor implementing processor-implementable instructions and/or stored on a suitable storage medium, such as computer memory, hard disk, floppy disk, ROM, PROM etc, may implement the processes described. The processor may be a computer, a network of computers, or one or more dedicated processors.

The method is intended to be included in a software tool whose input is a collection of MSCs, preferably describing phase transitions as above. The output of the software tool is designed to be the phase automaton that gives the minimal implementation of these phase transitions.

One example of such a system 700 that includes the software tool is illustrated in FIG. 7. The system overview includes a phase automaton generator 710, operably coupled to a specification function 720 that is, in turn, operably coupled to a man machine interface (MMI) 730. In accordance with the preferred embodiment of the present invention, the phase automaton generator 710 has been adapted to include a phase automation function 712 that receives the partial system specification as generated in the above manner. The phase automation function 712 applies a phase automation method, as described above, and provides an output of minimal phase automaton 714.

The specification function 720 includes the system specification 722, for example a TETRA specification, operably coupled to a specification editor function 724 to generate the partial specification. The specification editor function 724 receives, and passes information to, a machine operating system interface 726. The machine operating system interface 726 interfaces with the man machine interface (MMI) 730. The MMI 730 includes a computation process 732, which accesses one or more physical memory storage devices 734 in order to obtain data to assist the aforementioned methods. The computation process 732 is also operably coupled to a visual display 736 and a user input device 738 such as a keyboard.

The examples given above are merely exemplary, and it will be appreciated that the invention may be applied to other examples of system specifications. Also, variation in the algorithms or notation are possible, in particular by using conventional finite state automaton generating options.

Advantageously, the inventor of the present invention has recognised the benefits that can be achieved by associating an automaton with a set of MSCs (or other graphical notation such as UML sequence diagrams, or use case maps), where the set of MSCs define implementations of the phase transitions in a system. In particular, there is no known technique in the area of searching for feature conflicts by concentrating on phase transition specifications and their associated implementations.

The aforementioned description provides a method to describe how phase transitions in a partial specification are to be implemented. A method also describes how the phase transitions in a partial specification define an implementation in the form of a finite state automaton.

It will be understood that the methods for describing a collection of test scripts in the form of a single finite state automaton, as described above, provide at least the following advantages:

(i) Any defects in a specification are detected early, thereby providing a significant benefit in reducing any system development/manufacturing costs;
(ii) An analysis can be made on the implied concurrent behaviour of features in partial specifications, which allows feature conflict detection;
(iii) A significant reduction in the search space of potential conflicts is achieved;
(iv) Detection of a small number of significant conflicts is obtained, rather than the known art which results in detection of a large number of minor conflicts; and
(v) Enables specifications that contain concurrent iterating processes to be dealt with in an improved manner. This is in contrast to prior art arrangements that can only cater for iteration where the processes iterate in a non-concurrent fashion. This is an important advantage in the telecommunications field where almost all processes iterate in a concurrent fashion.

Whilst specific, and preferred, implementations of the present invention are described above, it is clear that one skilled in the art could readily apply variations and modifications of such inventive concepts.

Thus, a mechanism to detect for feature conflicts in a system specification, particularly in a partially specified system, has been provided where the disadvantages described with reference to prior art arrangements have been substantially alleviated.

## Claims

1. A method (200) of detecting feature conflicts in a system specification, the method comprising the steps of:

   generating (210) phase transitions of a system specification, defined with a graphical notation; translating (230) said phase transitions into one or more abstract implementation; and analysing (260) feature combinations of said one or more abstract implementation to detect one or more feature conflicts in said system specification.

2. The method according to Claim 1, the method further **characterised by** the step of:

   defining said one or more abstract implementation as one or more finite state automata.

3. The method according to Claim 1 or Claim 2, wherein said system specification is a partially specified system and said step of analysing feature combinations includes the step of detecting feature conflicts in said partially specified system.

4. The method according to any preceding Claim, wherein one or more message sequence charts are used to define a phase of operation at any instance in time within the system specification.

5. The method according to any preceding Claim, wherein the step of translating includes translating graphical notation of phase transitions into one or more deterministic finite state automata, which uses composite phase states in order to represent a number of phases of operation of the system specification.

6. The method according to Claim 5, wherein the number of phases of operation of the system specification are used in determining and translating the phase transitions.

7. A method (200) of constructing a phase automaton, the method comprising the steps of:

   collecting (210) a set of phase traces from a system specification; and defining (230) a number of states and a number of phase transitions in finite state automata for a number of phase traces of the set of phase traces, thereby generating a phase automaton.

8. The method of constructing a phase automaton according to Claim 7, the method further **characterised by** the step of:

   introducing (230) a number of states to said finite state phase automaton, to ensure a number of precursors to said number of phase traces are extended to generate respective phase traces.

9. The method of constructing a phase automaton according to Claim 8, the method further **characterised by** the step of:

   merging (240) states when a precursor matches two or more phase traces thereby reducing an overall state space.

10. The method of constructing a phase automaton according to Claim 9, the method further **characterised by** the step of:

    repeating said merging step for any successor states to ensure the phase trace automaton is deterministic.

11. A method of testing a system specification **characterised by** the step of detecting feature conflicts in a system specification using the method according to any of claims 1 to 6.

12. The method according to any preceding claim, wherein the system is a telecommunication system.

13. A storage medium (734) storing processor-implementable instructions for controlling one or more processors to carry out the method of any of Claims 1 to 6 or any of Claims 7 to 10.

14. Apparatus (712) adapted to implement the method of any of Claims 1 to 6 or any of Claims 7 to 10.

15. A method substantially as hereinbefore described with reference to the accompanying drawings.

**EP 1 467 532 A2**

16. Apparatus substantially as hereinbefore described with reference to the accompanying drawings.

110 — MARKETING REQUIREMENTS

120 — EXISTING INFRASTRUCTURE

130 — EXISTING FEATURE

ADDITIONAL FUNCTIONAL FEATURE —140

SPECIFICATION —150

PARTIAL SPECIFICATION FOR ADDITIONAL —160

*100*

# FIG. 1

210 — GENERATE PHASE TRACES

220 — INITIALISE STATES IN PHASE AUTOMATION

FOR EACH PHASE TRACE, ADD NEW STATES AND TRANSITIONS, TO FORM ONE OR MORE ABSTRACT IMPLEMENTATION, PREFERABLY AS FINITE STATE AUTOMATION —230

USE THE SEMANTICS OF THE IMPLEMENTATION TO MERGE STATES —240

APPLY STANDARD METHODS TO MINIMISE STATE SPACE AND ENSURE DETERMINISTIC TRANSITIONS —250

ANALYSE FEATURE COMBINATIONS OF ONE OR MORE ABSTRACT IMPLEMENTATIONS TO DETECT ONE OR MORE FEATURE CONFLICTS —260

*200*

# FIG. 2

FIG. 3

FIG. 4

FIG. 5

FIG. 6

FIG. 7